# EUROPEAN PATENT APPLICATION

(11) **EP 4 183 485 A1**
(43) Date of publication of application: **24.05.2023**
(21) Application number: 21953607.5
(22) Date of filing: 01.09.2021
(51) Int. Cl.: B01J 29/74, B01D 53/58, B01D 53/86, B01J 20/32, F01N 3/20

(54) **AMMONIA ADSORPTION CATALYST, AND PREPARATION METHOD THEREFOR AND USE THEREOF**

(71) Applicant: Ningbo Geely Royal Engine Components Co., Ltd., Ningbo City, Zhejiang 315336 (CN); Aurobay Technology Co., Ltd., Ningbo, Zhejiang 315800 (CN); Zhejiang Geely Holding Group Co., Ltd, Hangzhou, Zhejiang 310051 (CN)
(72) Inventor: XU, Lifeng, Ningbo City Zhejiang 315336 (CN); SHEN, Yuan, Ningbo City Zhejiang 315336 (CN); WEI, Hong, Ningbo City Zhejiang 315336 (CN); WANG, Ruiping, Ningbo City Zhejiang 315336 (CN); SCHOLTEN, Ingo, Ningbo City Zhejiang 315336 (CN)
(74) Representative: Boult Wade Tennant LLP
(86) International application number: PCT/CN2021/116066
(87) International publication number: WO 2023/028928

(57) **Abstract**

The present invention provides an ammonia adsorption catalyst and a preparation method and a use thereof, where the ammonia adsorption catalyst includes a substrate and an adsorption layer located on the surface of the substrate, and the adsorption layer includes a noble metal-containing zeolite adsorption material. The catalyst of the present invention has the advantages of high ammonia adsorption/conversion efficiency, low cost, and flexible application, etc.

## Description

### TECHNICAL FIELD

The present invention relates to the field of catalysts for engine exhaust treatment, and, in particular, to an ammonia adsorption catalyst and a preparation method and a use thereof.

### BACKGROUND

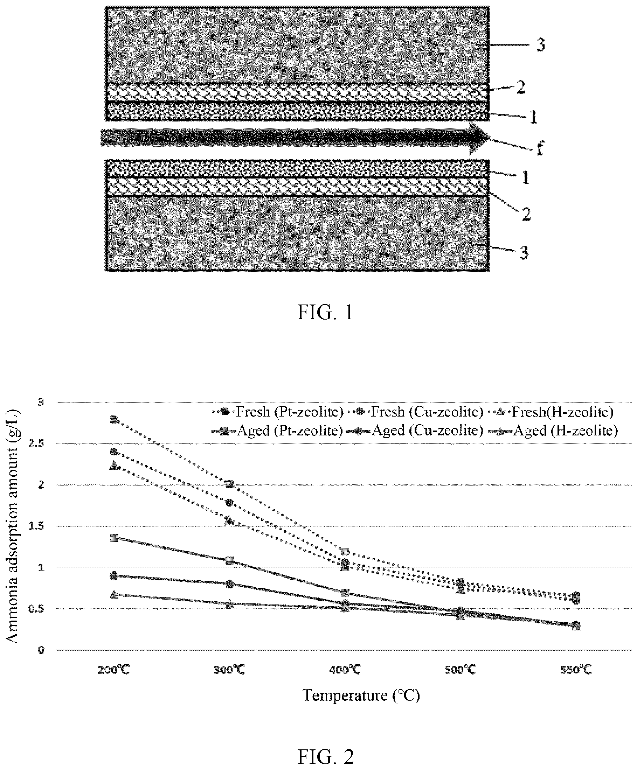

There are two sources of ammonia (NH₃) in an automotive engine exhaust gas aftertreatment system: (1) one is from catalysts (for example, three-way catalyst (TWC) and lean-burn nitrogen oxide trap catalyst (LNT)) under a rich operating condition; and (2) the other is from a reductant for lean-burn selective catalytic nitrogen oxides reduction (SCR) catalysts that is actively added into the aftertreatment system from the outside. The basic function of ammonia oxidation catalysts (also called ammonia slip catalysts, ASC) is to adsorb and eliminate (including conversion or oxidation) excess ammonia (NH₃) from the exhaust gas to reduce ammonia leakage with the tailpipe exhaust gas. Typically, ASC catalysts are positioned at the rear end of the aftertreatment system. At present, ASC products in the market generally have two separate coatings, in which one is an ammonia oxidation coating (for example, an ammonia oxidation layer 2 in FIG. 1) located on the surface of a substrate 3, and the other is an ammonia adsorption material layer (for example, an adsorption layer 1 in FIG. 1) located on the surface of the ammonia oxidation coating. As shown in FIG. 1, the ammonia-containing gas flow f passing through ASC is firstly adsorbed by the adsorption layer 1 at the front end, the adsorbed ammonia is gradually desorbed with the flow of the engine exhaust gas, and the desorbed ammonia quickly passes through the ammonia oxidation layer 2 and is at least partially oxidized (during this process, the non-adsorbed and non-oxidized ammonia continues to be adsorbed, desorbed and oxidized through the downstream adsorption layer and ammonia oxidation layer).

Typical ammonia adsorption materials used to form the ammonia adsorption material layer are metal ion exchanged zeolite materials (for example, Cu-β, Fe-β, Cu-SSZ-13, etc.). This kind of zeolite materials can not only adsorb ammonia, but also gradually consume ammonia as a reductant for converting NOx under lean-burn (air-fuel ratio λ>1.0) conditions, which mainly adsorbs ammonia from exhaust gas through chemical and physical adsorption. Chemisorbed ammonia is relatively stable and is not easily desorbed, but the amount of chemisorbed ammonia is very limited (chemisorption occurs mainly at the Bronsted acid site (BAS) in the zeolite, and typically the amount of chemisorbed ammonia is less than 15% of the total amount of adsorbed ammonia. When the catalyst is exposed to normal thermal aging temperature (typically around 650-700°C, and especially >700°C), the BAS acid sites are extremely reduced, thereby significantly reducing the amount of ammonia chemisorbed by the adsorbent material). A large amount of ammonia in the exhaust gas is temporarily and physically adsorbed in the zeolite by Van der Waals force that is present in the zeolite, the ammonia adsorbed in the zeolite will be gradually desorbed with the flow of the engine exhaust gas, and the ammonia desorbed from the front-end zeolite will be re-adsorbed and desorbed by the downstream zeolite, and moves in cycles. The ammonia oxidation material in the ammonia oxidation layer generally includes a base material such as alumina and a noble metal (for example, platinum (Pt), etc.) loaded on the base material. Ammonia passes rapidly through the ammonia oxidation layer after being desorbed from the zeolite material in the adsorption layer and then is at least partially oxidized, and the unoxidized ammonia continues to be adsorbed, desorbed and oxidized by the downstream adsorption and ammonia oxidation layers.

At present, ASC has been widely used at the rear-end of a selective redox (SCR) system under lean-burn operating conditions and of three-way catalyst (TWC) in natural gas (including compressed natural gas (Compressed Natural Gas, CNG) and liquefied natural gas (Liquefied Natural Gas, LNG)) engine operating system under stoichiometry (λ=0.98-1.02) operating conditions to reduce ammonia leakage from the aftertreatment systems. In particular, under lean-burn (oxygen-rich) operating conditions, NOx in the exhaust gas may generally be removed by SCR. Specifically, urea is injected and hydrolyzed to ammonia, ammonia selectively reduces NOx to nitrogen and water, and the excess ammonia can be removed by ASC at the rear end of SCR, thereby avoiding ammonia leakage. Under the lean-burn conditions, ammonia is removed by ASC mainly through three ways: (1) being catalytically oxidized by the ammonia oxidation layer; (2) being partially consumed in the zeolite material as a reductant for converting NOx; and (3) a small portion of ammonia being oxidized to nitrogen and the like in the zeolite material at high temperature. The working principle of ASC in the TWC aftertreatment system of a stoichiometry operating engine is as follows: unlike actively feeding ammonia (injecting urea) in the SCR aftertreatment system of a lean-burn operating engine, the ammonia from the TWC is only produced under rich conditions (λ<1.0) and is adsorbed by the downstream ASC (the adsorbed ammonia cannot be oxidized or eliminated under rich conditions); and when the exhaust gas is switched to lean (λ>1.0) conditions (including engine operating modes such as deceleration and fuel cut-off, etc.), ammonia is oxidized mainly in the oxidation layer under oxygen-rich conditions, in which as the adsorption amount of ammonia by the ASC is greater and the oxidation efficiency is higher, the ability to reduce the ammonia leakage in the exhaust gas of a stoichiometry operating engine is stronger.

As mentioned above, a typical ASC catalyst at present is composed of an adsorption layer on a surface layer and an ammonia oxidation layer on a bottom layer (as shown in FIG. 1). In order to improve the efficiency of ASC in reducing ammonia leakage, the amount of ammonia adsorption material needs to be increased as much as possible. Therefore, the amount of adsorption layer in the ASC usually reaches above 150 g per liter of catalyst substrate, and the amount of ammonia oxidation layer is below 50 g per liter of substrate. Currently, the ASC generally has the following defects: (1) even if the total coating amount is above 200 g per liter of substrate, the ammonia adsorption amount of ASC is still insufficient and the adsorption efficiency is low; (2) the oxidation of ammonia is mainly completed through an ammonia oxidation layer in a short period from the desorption of ammonia from a zeolite material to the re-adsorption of ammonia by the zeolite material, and the reaction time is short, which limits the conversion efficiency; (3) the specific combination of adsorption layer and ammonia oxidation layer determines that ASC must be applied alone (i.e., ASC and other catalysts use different substrates or are coated in separate zones), which will increase the costs of substrates and encapsulation of aftertreatment system, and in the meantime, may pose difficulties for the rational arrangement of the limited chassis underfloor space.

Reducing ammonia leakage from engine exhaust gas has attracted the attention of environmental protection agencies, vehicle enterprises and others, and the more stringent Euro 7 (EU7)/China 7 (CN7) emission standards are expected to be introduced around 2026. Applying ASC to reduce vehicle tailpipe ammonia slip has already become an important approach. How to further improve the efficiency of ASC, reduce the cost of ASC products and enhance the flexibility of ASC application is still a technical problem to be urgently solved by those skilled in the art.

### SUMMARY

The present invention provides an ammonia adsorption catalyst, which has the advantages of high ammonia adsorption/conversion efficiency, low cost and flexible application, and can effectively improve the defects existing in the prior art.

An aspect of the present invention provides an ammonia adsorption catalyst, including a substrate and an adsorption layer located on the surface of the substrate, where the adsorption layer includes a noble metal-containing zeolite adsorption material.

According to an embodiment of the present invention, the noble metal includes platinum and/or palladium.

According to an embodiment of the present invention, the noble metal in the noble metal-containing zeolite adsorption material has a content of 1-20 g/cubic feet.

According to an embodiment of the present invention, the noble metal-containing zeolite adsorption material is obtained by exchanging a noble metal into a zeolite by an ion exchange method, and the zeolite includes at least one of β zeolite, Y zeolite, and ZSM-5 zeolite.

According to an embodiment of the present invention, a mass content of the noble metal-containing zeolite adsorption material in the adsorption layer is 90-100%.

According to an embodiment of the present invention, a mass-to-volume ratio of the noble metal-containing zeolite adsorption material to the substrate is (30-200) g:1 L.

According to an embodiment of the present invention, the substrate includes at least one of cordierite, silicon carbide, and metal substrate.

Another aspect of the present invention provides a method for preparing the above ammonia adsorption catalyst, including: performing an ion exchange treatment on a zeolite by using a noble metal precursor to obtain a noble metal-containing zeolite adsorption material; mixing the noble metal-containing zeolite adsorption material with a binder and a solvent to prepare a slurry; and coating the slurry on the substrate, drying and calcining to form an adsorption layer, thereby obtaining an ammonia adsorption catalyst.

A yet another aspect of the present invention provides a use of the above ammonia adsorption catalyst in an engine aftertreatment system.

According to an embodiment of the present invention, the engine aftertreatment system includes a stoichiometry operating engine aftertreatment system.

According to an embodiment of the present invention, the engine aftertreatment system includes a three-way catalyst, and a gas to be treated in the engine aftertreatment system is treated firstly by the three-way catalyst and then by the ammonia adsorption catalyst; or the engine aftertreatment system includes a selective redox catalyst, and a gas to be treated in the engine aftertreatment system is treated firstly by the selective redox catalyst and then by the ammonia adsorption catalyst.

According to an embodiment of the present invention, the ammonia adsorption catalyst is used in combination with a three-way catalyst, the combination including at least one of the following manner A and manner B: manner A: a three-way catalyst layer formed by a three-way catalyst is disposed between the adsorption layer of the ammonia adsorption catalyst and the substrate of the ammonia adsorption catalyst; and manner B: the adsorption layer of the ammonia adsorption catalyst further contains the three-way catalyst.

In the present invention, the noble metal is introduced into the zeolite adsorption material, and thus there is no need to coat the ammonia oxidation layer on the substrate, which simplifies the manufacturing process of a catalyst, reduces the manufacturing difficulty, reduces costs, saves spaces simultaneously and enables more zeolite adsorption materials to be loaded on the substrate to increase the ammonia adsorption amount, and the ammonia adsorbed in the zeolite adsorption material can be directly catalytically oxidized in the zeolite adsorption material, which prolongs the oxidation reaction time of ammonia, thereby improving the conversion rate of ammonia. Furthermore, the ammonia adsorption catalyst of the present invention may also be used in combination with other catalyst (for example, in combination with a three-way catalyst (TWC) coating, where ammonia is adsorbed when exhaust gas is rich (λ<1.0) and ammonia is oxidized when exhaust gas is lean (λ>1.0)), thereby having more flexibility for application. In addition, researches show that, compared with conventional zeolites exchanged by other metal atom (for example, Cu-zeolite) and hydrogen-type zeolite (H-zeolite), the zeolite adsorption material with the introduction of noble metal (the exchanged noble metal in the zeolite replaces the Bronsted acid site H⁺ in the zeolite) in the present invention can not only increase the ammonia adsorption amount, but also exhibit better thermal stability and relatively better ammonia adsorption performance at a thermal aging temperature (650-750°C). The thermal aging temperature is generally higher than the actual application temperature, and the temperature during the application of the catalyst is generally 200-500°C. The ammonia adsorption catalyst of the present invention can be used at 200-500°C or even higher temperature. Therefore, the ammonia adsorption catalyst of the present invention has the advantages of high ammonia adsorption/conversion efficiency, low cost, flexible application and good thermal stability, etc., which is of great significance for practical industrial application.

### BRIEF DESCRIPTION OF DRAWINGS

FIG. 1 is a schematic diagram of a structure and an application process of the existing ASC.
FIG. 2 is a graph showing the variation of ammonia adsorption amount as a function of temperature for different fresh and aged ammonia adsorption catalysts ASCs with the same zeolite loading amount in an embodiment of the present invention.
FIG. 3 is a graph showing the variation of ammonia conversion efficiency as a function of temperature under lean-burn conditions (λ>1) for an ammonia adsorption catalyst in an embodiment of the present invention and an ASC in a Comparative Example.

### Description of reference numerals:

1: adsorption layer; 2: ammonia oxidation layer; 3: substrate; f: gas flow.

### DESCRIPTION OF EMBODIMENTS

To enable those skilled in the art better to understand the solutions of the present invention, the present invention will be described in further detail below. The specific embodiments listed below are merely intended for description of the principles and features of the present invention, and the examples given are merely for the purpose of explaining the present invention and are not intended to limit the scope of the present invention. All other embodiments obtained by persons of ordinary skill in the art based on embodiments of the present invention without creative effort shall fall within the protection scope of the present invention.

The ammonia adsorption catalyst of the present invention includes a substrate and an adsorption layer located on the surface of the substrate, where the adsorption layer includes a noble metal-containing zeolite adsorption material.

In the present invention, the zeolite adsorption material has good adsorption and catalytic oxidation capacities for ammonia, where the noble metal introduced into the zeolite adsorption material mainly plays a role in catalytic oxidation of ammonia. For example, the noble metal may include, but is not limited to, at least one of platinum (Pt), palladium (Pd) and rhodium (Rh). In some preferred embodiments, the noble metal includes platinum and/or palladium, which facilitates to further improve the ammonia adsorption catalytic oxidation efficiency, and saves costs simultaneously.

Relatively speaking, if a content of a noble metal is too high, the cost will be increased, while a content of a noble metal is too low, the adsorption and conversion performance of an ammonia adsorption catalyst for ammonia will be affected to a certain extent. Therefore, considering these factors comprehensively, a content of the noble metal in the noble metal-containing zeolite adsorption material may be generally controlled to be 1-20 g/cubic feet, for example, 1, 3, 5, 7, 10, 12, 15, 18, 20 g/cubic feet or a range between any two thereof, in general, 3-5 g/cubic feet is preferred.

In the present invention, the above noble metal-containing zeolite adsorption material may be obtained by exchanging the noble metal into a zeolite by an ion exchange method. In some embodiments, the zeolite to be used may include at least one of β zeolite, Y zeolite and ZSM-5. A volume of the zeolite adsorption material is basically equal to a volume of the zeolite to be used; and during the preparation of the zeolite adsorption material, the consumption of a noble metal and a zeolite may be controlled to satisfy 3-5 g per cubic feet, so as to obtain a zeolite adsorption material with a noble metal content of 3-5 g/cubic feet. Of course, the present invention is not limited to the ion exchange method, and the noble metal may also be exchanged into a zeolite by a spraying method or the like.

Specifically, the process of the ion exchange method may generally include: dissolving a noble metal precursor in a solvent to form an impregnation solution, impregnating a zeolite with the impregnation solution, such as equal-volume impregnation and the like, and then drying and calcining to obtain a noble metal-containing zeolite adsorption material. The noble metal precursor may generally include a compound containing a noble metal, such as a salt of noble metal, specifically a soluble salt of noble metal, for example, nitrate, such as platinum nitrate and/or palladium nitrate and the like. Anion such as nitrate radical may be usually decomposed in the course of drying and calcination, thereby being detached from the zeolite material.

In general, the above adsorption layer may further contain a binder and/or an excipient (auxiliary material) to facilitate to bond the above noble metal-containing zeolite adsorption material to form a coating (i.e., adsorption layer), thereby optimizing the strength and stability of the adsorption layer, etc. In some embodiments, a mass content of the noble metal-containing zeolite adsorption material in the adsorption layer is 90-100%, and the balance may be the binder and the auxiliary material. Optionally, the binder may include aluminum gel and/or silica gel, etc., and the auxiliary material may include cerium material and/or zirconium material, etc.

Specifically, the above noble metal-containing zeolite adsorption material may be coated on the surface of a substrate to form an adsorption layer. In specific implementation, a zeolite adsorption material may be mixed with a binder and a solvent to make a slurry, and the slurry may be coated on the surface of a substrate and then be dried to form an adsorption layer.

Through further research, a mass-to-volume ratio of the above noble metal-containing zeolite adsorption material to the substrate is (30-280)g: 1L, for example, 30g: 1L, 50g: 1L, 80g: 1L, 100g: 1L, 120g: 1L, 150g: 1L, 180g: 1L, 200g: 1L, 230g: 1L, 250g: 1L, 280g: 1L or a range being composed of any two thereof. In specific implementation, a thickness of the adsorption layer (a coating amount of the zeolite adsorption material on the substrate) may be regulated according to the chassis space of a vehicle, and the zeolite adsorption material may be coated as much as possible to increase the ammonia adsorption amount. In general, it is preferred that a ratio of the adsorption layer mass to the substrate volume is (150-230)g: 1L.

Conventional substrates in the art may be used in the present application, and in some preferred embodiments, the substrate includes at least one of cordierite (typically in the form of ceramic honeycomb), silicon carbide and metal substrate, etc. The structure of the substrate is, for example, particulate filter (particulate filter, GPF) or the like, which is not particularly limited by the present invention.

A method for preparing the ammonia adsorption catalyst provided by the present invention includes: performing an ion exchange treatment (i.e., exchanging a noble metal into a zeolite by an ion exchange method) on a zeolite by using a noble metal precursor to obtain a noble metal-containing zeolite adsorption material; mixing the noble metal-containing zeolite adsorption material with a binder and a solvent to prepare a slurry; coating the slurry on a surface of the substrate, drying at 80-90°C to remove a large amount of solvent, then drying at 100-200°C to remove residual solvent, and then calcinating at 500-650°C to form an adsorption layer on the surface of the substrate, thereby obtaining the ammonia adsorption catalyst; where the calcinating time may be, but is not limited to, 1-2 hours.

In the present invention, the above ammonia adsorption catalyst may be used directly, or may be compounded with other catalyst or functional component thereof. For example, the above ammonia adsorption catalyst may be combined with TWC to form a multifunctional catalyst. Specifically, the TWC may be introduced into the adsorption layer, that is, the noble metal-containing zeolite adsorption material may be mixed with the TWC to form the adsorption layer, that is, the above adsorption layer further contains the TWC catalyst; or, in addition to the adsorption layer, the surface of the substrate may further be provided with a TWC coating formed by the TWC, and the adsorption layer and the TWC coating layer are located in different zones of the surface of the substrate (i.e., being arranged in zones on the surface of the substrate) and the two may or may not be joined (i.e., separated by a distance); or, the TWC coating and the adsorption layer are arranged in layers on the surface of the substrate, and the TWC coating layer is located between the surface of the substrate and the adsorption layer, or the adsorption layer is located between the TWC coating and the surface of the substrate, and preferably the adsorption layer is located between the TWC coating layer and the surface of the substrate.

The present invention also provides a use of the above ammonia adsorption catalyst in an engine aftertreatment system, which may include a stoichiometry operating engine aftertreatment system. That is, the above ammonia adsorption catalyst may be used in the stoichiometry operating engine aftertreatment system, for example, it may be used at the rear-end of TWC in a stoichiometry operating engine aftertreatment system (i.e., the engine exhaust gas is treated firstly by TWC and then by the above ammonia adsorption catalytic gas), which can efficiently adsorb and convert ammonia. In this case, the engine stoichiometry operation refers to an operation that is completed when air-fuel ratio (λ) fluctuates around a stoichiometry (λ=1.0) in a small range (i.e., the fuel such as natural gas is combusted based on the stoichiometry combustion mode during the engine operation), and air-fuel ratio of the stoichiometry operating engine is generally from 0.98 to 1.02 (i.e., λ=0.98-1.02). In general, during the specific application process of the engine stoichiometry operation, ammonia is generated from the TWC under rich conditions (λ<1.0); and due to the low oxygen content, the ammonia adsorption catalyst cannot basically oxidize ammonia, but mainly adsorb ammonia. Under lean conditions (λ>1.0), ammonia is no longer generated from TWC, and the ammonia adsorption catalyst can oxidize ammonia, and then mainly used to oxidize ammonia.

The ammonia adsorption catalyst of the present invention may be used in a stoichiometry operating engine aftertreatment system, which can significantly improve the ammonia adsorption amount and simultaneously exhibit good conversion (catalytic oxidation) performance for ammonia. However, without being limited to the stoichiometry operating engine aftertreatment system, the above engine aftertreatment system may also include a lean-burn (λ>1.0) operating engine aftertreatment system, that is, the above ammonia adsorption catalyst may be used in the lean-burn (λ>1.0) operating engine aftertreatment system, for example, at the SCR rear-end of the lean-burn operating engine aftertreatment system.

Specifically, the ammonia adsorption catalyst may be used alone. In some embodiments, the engine aftertreatment system includes a three-way catalyst (TWC), and the exhaust gas to be treated in the engine aftertreatment system (a tail gas) is treated firstly by the three-way catalyst and then by the ammonia adsorption catalyst, that is, the ammonia adsorption catalyst is used at the rear end of TWC. In other embodiments, the engine aftertreatment system includes a selective redox catalyst (SCR), and the gas to be treated in the engine aftertreatment system is firstly treated by the selective redox catalyst and then by the ammonia adsorption catalyst, that is, the ammonia adsorption catalyst is used at the rear end of SCR catalyst.

Use of the present invention is not limited to the above manners, the ammonia adsorption catalyst may also be combined with other catalyst (for example, TWC, etc.) or functional components thereof. For example, in some embodiments, the ammonia adsorption catalyst is used in combination with the three-way catalyst, the combination manner including at least one of the following manner A and manner B: the manner A: a three-way catalyst layer formed by the three-way catalyst is disposed between the adsorption layer of the ammonia adsorption catalyst and the substrate of the ammonia adsorption catalyst; and the manner B: the adsorption layer of the ammonia adsorption catalyst further contains the three-way catalyst. In its application, the ammonia adsorption catalyst may be used specifically in a TWC system of an engine aftertreatment system.

To make the objectives, technical solutions, and advantages of the present invention clearer, the technical solutions of the present invention will be described clearly and comprehensively below with reference to the specific embodiments of the present invention. Apparently, the described embodiments are merely a part rather than all embodiments of the present invention. All other embodiments obtained by persons of ordinary skill in the art based on embodiments of the present invention without creative effort shall fall within the protection scope of the present invention.

### Example 1

The ammonia adsorption catalyst (denoted as fresh (Pt-zeolite)) of this Example was composed of a substrate, an alumina coating located on the surface of the substrate and an adsorption layer located on the surface of the alumina coating, where the alumina coating was formed by coating with alumina material and a binder, and the adsorption layer was formed by coating with a platinum-containing zeolite adsorption material (Pt-zeolite) and a binder.

The components of the adsorption layer included the binder and the platinum-containing zeolite adsorption material (Pt-zeolite), a mass content of Pt-zeolite in the adsorption layer was 97% and the balance was the binder.

A content of platinum in the Pt-zeolite was 5g/cubic feet.

The Pt-zeolite was obtained by exchanging platinum into a zeolite by an ion exchange method, and the zeolite used was β-zeolite.

A mass-to-volume ratio of the Pt-zeolite to the substrate was 150g: 1L (i.e., a loading amount of Pt-zeolite was 150g/L).

A mass-to-volume ratio of the alumina coating to the substrate was 50g: 1L (i.e., the loading amount of alumina was 50g/L).

The substrate was cordierite.

### Example 2

Example 2 differed from Example 1 in that the ammonia adsorption catalyst was composed of a substrate and an adsorption layer located on the surface of the substrate (i.e., there was no alumina coating), and the mass-to-volume ratio of the Pt-zeolite to the substrate was 200g:1L (i.e., a loading amount of Pt-zeolite was 200g/L).

### Comparative Example 1

The catalyst (denoted as fresh (Cu-zeolite)) of this Comparative Example 1 was a conventional ASC which was composed of a substrate, an ammonia oxidation layer located on the surface of the substrate and an ammonia adsorption layer located on the surface of the ammonia adsorption layer, where the ammonia adsorption layer was formed by coating with the Cu-zeolite and a binder, and the ammonia oxidation layer (50 g/L) was formed by coating with an alumina material loaded with platinum and a binder; where:

The substrate in Comparative Example 1 was the same as the substrate in Example 1.

A content of platinum in a total coating composed of the ammonia adsorption layer and the ammonia oxidation layer in Comparative Example 1 was the same as the content of platinum in the adsorption layer in Example 1.

A loading amount of the Cu-zeolite in Comparative Example 1 was the same as a loading amount of the Pd-zeolite in Example 1 (150g/L).

### Comparative Example 2

The catalyst (denoted as fresh (H-zeolite)) of this Comparative Example 2 differed from that of Comparative Example 1 in that: the Cu-zeolite was replaced by the H-zeolite, and the remaining conditions were the same as those of Example 1.

### Catalyst performance testing

### 1. Catalyst aging

The ammonia adsorption catalyst of Example 1 was performed to react for 40 hours in a tubular reactor at 720°C at a space velocity of 30,000hr-1 to obtain an aged ammonia adsorption catalyst (denoted as aged (Pt-zeolite)).

The catalyst in Comparative Example 1 was aged according to the above aging process to obtain an aged catalyst (denoted as aged (Cu-zeolite)).

The catalyst in Comparative Example 2 was aged according to the above aging process to obtain an aged catalyst (denoted as aged (H-zeolite)).

### 2. Testing

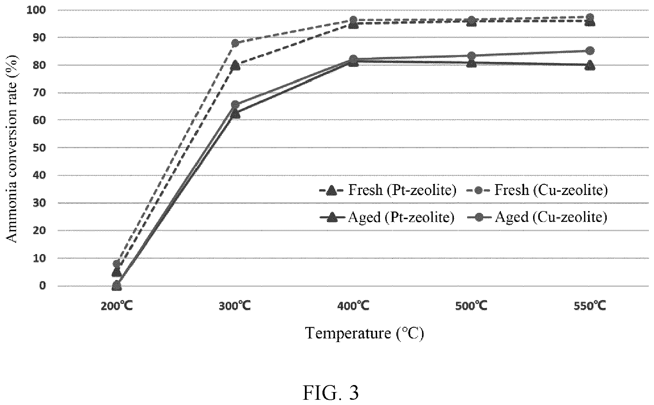

The following tests 1 and 2 were performed using the above fresh (Pt-zeolite), fresh (Cu-zeolite), fresh (H-zeolite), aged (Pt-zeolite), aged (Cu-zeolite), and aged fresh (H-zeolite) catalysts, respectively, to measure variation graphs of ammonia adsorption amount as a function of temperature under stoichiometry operating conditions (see FIG. 2) and variation graphs of ammonia conversion rate as a function of temperature under lean-burn operating conditions (see FIG. 3), for respective catalysts.

Testing 1: a composition of the exhaust gas after TWC treatment from a stoichiometry operating engine aftertreatment system (see syngas for ammonia adsorption experiment in Table 1) at a space velocity of 170,000hr-1 was simulated and the variation graph of ammonia adsorption amount (storage amount) of a catalyst as a function of temperature was tested at this condition; and

Testing 2: a composition of the exhaust gas after SCR treatment from a lean-burn operating engine aftertreatment system (see syngas for ammonia oxidation experiment in Table 1) at a space velocity of 170,000hr-1 was simulated and the variation graph of ammonia conversion efficiency (ammonia conversion rate) of a catalyst as a function of temperature was tested.

**Table 1**

| Experimental syngas | O₂ (%) | Water vapor (%) | CO₂ (%) | Ammonia (ppm) | Nitrogen |
|---|---|---|---|---|---|
| Syngas for ammonia adsorption experiment | 0 | 10 | 8 | 500 | Balance |
| Syngas for ammonia oxidation experiment | 5 | 10 | 8 | 100 | Balance |

As can be seen from FIG. 2, the ammonia adsorption amount of each catalyst decreased with the increase of temperature, and the ammonia adsorption amount of the fresh (Pd-zeolite) decreased from 2.79g/L at 200°C to 0.65g/L at 500°C; aging may also affect the ammonia adsorption performance of catalysts, and the ammonia adsorption amount of the aged (Pd-zeolite) was about 1.36g/L at 200°C. Further, both fresh and aged catalysts, the ammonia adsorption amounts of the ammonia adsorption catalysts in Example 1 were each higher than those of the catalysts in Comparative Example 1 and Comparative Example 2, showing better ammonia adsorption performance and thermal stability. The ammonia adsorption amounts of the fresh (Pt-zeolite), the fresh (Cu-zeolite) and the fresh (H-zeolite) at 200°C were 2.79g/L, 2.4g/L and 2.3g/L, respectively. The ammonia adsorption amounts of the aged (Pt-zeolite), the aged (Cu-zeolite) and the aged fresh (H-zeolite) at 200°C were 1.36g/L, 0.9g/L and 0.67g/L, respectively.

According to FIG. 3, it can be seen that the ammonia adsorption catalysts of Example 1 had good ammonia conversion performance while increasing the ammonia adsorption amount, and had an ammonia conversion rate which was close to those of catalysts in Comparative Example 1 and Comparative Example 2; the ammonia conversion rates of catalysts tended to increase with the increase of temperature, and the catalysts had a decreased ammonia conversion performance after aging, but the aged (Pt-zeolite) can still maintain a relatively high ammonia conversion rate.

In general, a process of removing ammonia from the exhaust gas for the stoichiometry operating engine may be divided into two relatively independent and transient processes: generating ammonia and then being adsorbed by a catalyst such as ASC when the fuel is rich, and oxidizing ammonia when the fuel is lean. As described above, the ammonia adsorption catalyst of Example 1 was substantially equivalent to catalysts of Comparative Examples 1 and 2 in terms of the catalytic oxidation efficiency of ammonia, and the ammonia adsorption catalyst of Example 1 was significantly superior to catalysts of Comparative Examples 1 and 2 in terms of the ammonia adsorption amount. In addition, the ammonia adsorption catalyst of Example 1 can be coated with up to 30% more ammonia adsorption (zeolite) material than catalysts of Comparative Examples 1 and 2 in the case of the same size of substrate. Under the condition that the catalytic oxidation efficiency on ammonia was essentially equivalent, the larger the ammonia adsorption amount was, the better the removal effect on ammonia from the exhaust gas was.

In the present invention, in order to reduce the influence of variables, the above Example 1 was designed, and the relevant experimental processes of Example 1 and Comparative Example 1 were listed, which proved that the ammonia adsorption catalyst of the present invention has a more excellent ammonia reduction effect relative to conventional ASC. In the present invention, Example 2 was further designed, and the above experimental tests were performed on catalysts of Example 2, and the results showed that the ammonia adsorption performance, ammonia oxidation performance and thermal stability of Example 2 were all superior to those of the ammonia adsorption catalyst of Example 1.

The embodiments of the present invention have been described above. However, the present invention is not limited to the above embodiments. Any modification, equivalent substitution, improvement, and the like made within the spirit and principle of the present invention shall be included in the protection scope of the present invention.

## Claims

1. An ammonia adsorption catalyst, **characterized by** comprising a substrate and an adsorption layer located on a surface of the substrate, wherein the adsorption layer comprises a noble metal-containing zeolite adsorption material.

2. The ammonia adsorption catalyst according to claim 1, wherein the noble metal comprises platinum and/or palladium.

3. The ammonia adsorption catalyst according to claim 1 or 2, wherein the noble metal in the noble metal-containing zeolite adsorption material has a content of 1-20g/cubic feet.

4. The ammonia adsorption catalyst according to claim 1 or 2, wherein the noble metal-containing zeolite adsorption material is obtained by exchanging the noble metal into a zeolite by an ion exchange method, the zeolite comprising at least one of β zeolite, Y zeolite, and ZSM-5 zeolite.

5. The ammonia adsorption catalyst according to claim 1, wherein a mass content of the noble metal-containing zeolite adsorption material is 90%-100% in the adsorption layer.

6. The ammonia adsorption catalyst according to claim 1, wherein a mass-to-volume ratio of the noble metal-containing zeolite adsorption material to the substrate is (30-200) g: 1 L.

7. The ammonia adsorption catalyst according to claim 1 or 6, wherein the substrate comprises at least one of cordierite, silicon carbide, and metal substrate.

8. A method for preparing the ammonia adsorption catalyst according to any one of claims 1-7, **characterized by** comprising:
performing an ion exchange treatment on a zeolite by using a noble metal precursor to obtain a noble metal-containing zeolite adsorption material;
mixing the noble metal-containing zeolite adsorption material with a binder and a solvent to prepare a slurry; and
coating the slurry on the substrate, drying, and calcining to form an adsorption layer, thereby obtaining an ammonia adsorption catalyst.

9. Use of the ammonia adsorption catalyst according to any one of claims 1-7 in an engine aftertreatment system.

10. The use according to claim 9, wherein the engine aftertreatment system comprises a stoichiometry operating engine aftertreatment system.

11. The use according to claim 9 or 10, wherein
the engine aftertreatment system comprises a three-way catalyst, and a gas to be treated in the engine aftertreatment system is treated firstly by the three-way catalyst and then by the ammonia adsorption catalyst; or
the engine aftertreatment system comprises a selective redox catalyst, and the gas to be treated in the engine aftertreatment system is treated firstly by the selective redox catalyst and then by the ammonia adsorption catalyst.

12. The use according to claim 9 or 10, wherein the ammonia adsorption catalyst is used in combination with a three-way catalyst, the combination comprising at least one of the following manner A and manner B:
manner A: a three-way catalyst layer formed by the three-way catalyst is disposed between the adsorption layer of the ammonia adsorption catalyst and the substrate of the ammonia adsorption catalyst; and
manner B: the adsorption layer of the ammonia adsorption catalyst further contains the three-way catalyst.
